# EUROPEAN PATENT SPECIFICATION

(11) **EP 0 404 914 B1**
(45) Date of publication and mention of the grant of the patent: **27.04.1994**
(21) Application number: 90901608.1
(22) Date of filing: 11.01.1990
(51) Int. Cl.: F24F 11/00, G05D 23/00

(54) **PROCEDURE FOR CONTROLLING AND MAINTAINING AIR CURRENTS OR EQUIVALENT IN AN AIR-CONDITIONING INSTALLATION, AND AN AIR-CONDITIONING SYSTEM ACCORDING TO SAID PROCEDURE**
VERFAHREN ZUM STEUERN UND INSTANDHALTEN VON LUFTSTRÖMUNGEN IN EINER KLIMAANLAGE UND KLIMAANLAGE ZUR DURCHFÜHRUNG DES VERFAHRENS
PROCEDE DE REGULATION ET DE MAINTIEN DE COURANTS D'AIR OU EQUIVALENT DANS UNE INSTALLATION DE CONDITIONNEMENT D'AIR, ET SYSTEME DE CONDITIONNEMENT D'AIR SELON LEDIT PROCEDE

(30) Priority: 13.01.1989 FI 890170
(43) Date of publication of application: 02.01.1991
(73) Proprietor: HALTON OY, SF-47400 Kausala (FI)
(72) Inventor: AALTO, Erkki, SF-47400 Kausala (FI); MATTILA, Timo, SF-47400 Kausala (FI); NIEMELÄ, Mertsi, SF-15950 Lahti (FI); RANTANEN, Pertti, SF-47710 Jaala (FI)
(74) Representative: Lyndon-Stanford, Edward Willoughby Brooke
(86) International application number: PCT/FI90/00010
(87) International publication number: WO 90/08293

(56) References cited:
- EP-A- 0 238 979
- DE-A- 3 124 966
- DE-C- 2 715 835
- GB-A- 2 190 216
- US-A- 4 205 381
- US-A- 4 497 031
- US-A- 4 616 325
- US-A- 4 630 221
- US-A- 4 843 084

## Description

The present invention concerns a procedure for controlling and maintaining air currents or equivalent in an air-conditioning installation, and an air-conditioning system according to said procedure.

Control and adjustment of air-conditioning installations are nowadays based upon the use of pick-ups and controllers and control members of different kinds. Theoretically, the installations are expected to operate well, but in practice, soiling, ageing, electrical creeping, insensitivity of the pick-ups as well as difficulties in finding appropriate locations for pick-ups result in the majority of even the most modern air-conditioning installations operating unsatisfactorily. Defects occur in particular in energy economy and in optimising the use. Moreover, the feeling of comfort is unsatisfactory.

The object of the present invention is a novel air-conditioning system in which the efficiency of the system has been increased. US-A-4 497 031 discloses a low level microprocessor based direct digital system controller for automated monitoring and controller building systems. The controller comprises a power supply means, a processor for executing control and energy management algorithms, a field interface means and an operator panel.

The present invention provides a procedure for controlling and maintaining air flows or equivalent in an air-conditioning installation or equivalent, said air-conditioning installation comprising one or several air-conditioning machines, for producing the desired flows, and one or several duct systems for conducting the flows into desired room spaces or equivalent, and/or from room spaces or equivalent, said duct systems being composed of requisite trunk, zone and room duct systems, and said duct systems being provided with three or more control members on different levels of hierarchy, for controlling the air flows or equivalent, and with one or several control systems for defining, controlling and maintaining the requisite air flows or equivalent, wherein the control systems have controller units for controlling the air-conditioning machine or control members, between which controller units there exists a data transfer connection through data transfer buses or equivalent, said controller units each having a memory for storing data and programmable capacity for processing the data, the volumetric flow rates of air required at different points of the air-conditioning system at different times being defined at the same time on the basis of the air temperature and/or air quality and/or air noise levels and/or air pressure conditions, and/or other equivalent factors, characterised in that the combination of the setting values of the control members and of the air conditioning machines, with which the defined volumetric air flow quantities are realised is defined at the same time on the basis of the defined volumetric air flow rates, and at the same time the required control members and air-conditioning machines are set to setting values consistent with said setting value combination, and that when the volumetric flow rate of any air flow in the system is changed, a new setting value combination is determined for the control members and for the air-conditioning machine, and the control members and the air-conditioning machines are set to the settings implied by the new combination.

The design of the invention may be based on a system in which the properties of the air-conditioning apparatus or machines, control means and ducts are known, in particular the specific graphs of the air-conditioning machines or apparatus and control means. In the system of the invention, components are used which have controllable settings and in which the control setting is transmitted to a controller unit. In the system according to the invention, the operation parameters and specific graphs of a control member used in the system may be stored in the memory of a controller unit. The controller units of different control members are functionally interconnected through data transmission buses. In the system of the invention, when one control member of the system is altered, the other control members may be checked to find out if their setting need be altered due to the new setting of the first control member.

The invention also provides an air-conditioning system comprising at least one trunk duct and zone ducts branching off therefrom, and room ducts branching further from the zone ducts to spaces to be air-conditioned, the system comprising at least one air-conditioning machine in the trunk duct, for producing air flow and at least one control member controlling the volumetric air flow rate entering or leaving a zone duct, and control members controlling the volumetric air flow rate conducted to spaces, or an air flow derived therefrom, in which system, the control members are at different hierarchical levels for data transfer, the system comprising controller units for controlling the air-conditioning machine or control members, and data transfer buses whereby a data-transfer connection exists between the controller units, the controller units having memories for storing data and programs for processing the data, the system comprising programs by which the volumetric air flow rates required at different points of the air conditioning system at different times are determined on the basis of the air temperature and/or air quality and/or air noise level and/or air pressure conditions and/or other equivalent factors, characterised in that the combination of the setting values of the control members and the air conditioning machines by which the defined volumetric air flow rates are realised is determined centrally and at the same time on the basis of the defined volumetric air flow rates, the setting of the control member controlling the volumetric air flow quantities being determined centrally and simultaneously by the data derived from the controller unit of the control member which is on the highest hierarchical level, and the control members and air conditioning machines being set at the same time to settings consistent with the setting value combination. Air is fed from the zone ducts to spaces to be air-conditioned, along incoming or room ducts. The system may also comprise corresponding air outlet components, ie a duct for taking air from the space to be air-conditioned, leading to a zone duct which itself leads to an outlet trunk duct. The air-conditioning machine or air-conditioning apparatus is preferably a blower which is located in the trunk duct. The trunk duct may further comprise control members, eg control dampers. The zone ducts branching from the trunk duct further comprise duct opening control members preferably located adjacent to the junction of the zone duct and trunk duct. Preferably, this is a control damper. Similarly, the incoming duct branching from the zone duct to the space to be air-conditioned comprises a control member, advantageously a control damper. The control member may, however, be any control means. Similarly, the air-conditioning machine is preferably a blower, but may also be any other air flow producing apparatus.

In the system of the invention, when a control member of the system is altered, eg in order to increase the air-conditioning and air supplied to a room space, information concerning this alteration may be transmitted to other control members of the system. First, the control members of the zone duct may be affected, and if increased air flow is needed, the flow rate through the blower connected to the trunk duct is also increased. The air flow rate in the trunk duct may be increased in other ways. In the system of the invention, the positions of the control members may be determined by using programs. The entire programming may be located in the control unit of a control member of the incoming air duct of a space to be air-conditioned, or in the controller unit of a control member of a zone duct. Alternatively the entire programming may be located in the controller unit of an air-conditioning machine of the trunk duct. In the system of the invention, there is a data transfer connection between all controller units. All controller units may be connected to a common data transfer bus, making use of any suitable medium or any suitable data transfer protocol at each moment.

The invention will be described with reference to advantageous embodiments of the invention as set forth in the accompanying figures, in which:
Figure 1a is a schematic and axonometric drawing of the procedure and system of the invention;
Figure 1b is a schematic illustration of the system of the invention;
Figure 2 is a schematic drawing of the duct systems, control members and control units associated with the system and the procedure of the invention;
Figure 3 is a schematic illustration of an embodiment in which controller units are in serial connection;
Figure 4 is a schematic illustration of a further embodiment in which the controller units are connected in parallel;
Figure 5 is a schematic illustration of a damper located downstream of a blower placed in the trunk duct and an advantageous embodiment of its controller unit;
Figure 6 is a block diagram showing an advantageous embodiment of a blower controller unit Eₚ placed in the trunk duct;
Figure 7 is a block diagram of an advantageous embodiment of the controller unit E of a control damper placed in a zone duct;
Figure 8 is a block diagram of a controller unit for a control member disposed in the incoming air duct C leading to a space to be air-conditioned.

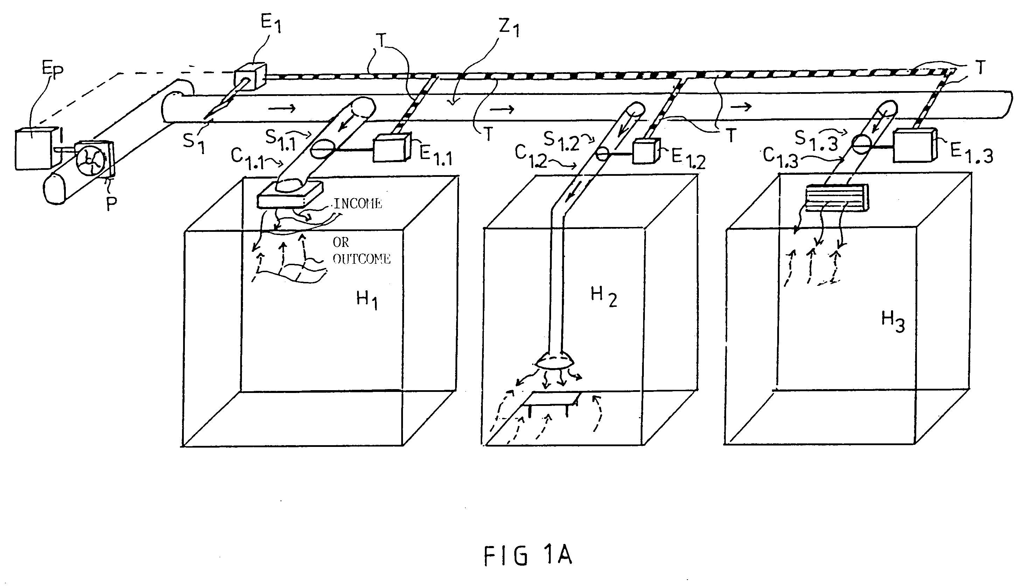

Figure 1a is an axonometic and schematic illustration of the system and procedure of the invention. The most comprehensive embodiment of the air-conditioning system of the invention comprises at least one main or trunk duct and zone or branch ducts branching therefrom, which lead into rooms, spaces or equivalent which are to be air-conditioned, or to focused ventilation points. In the procedure of the invention, air is removed from the above-mentioned points (broken arrows) or fresh air is carried to the points (solid arrows). At least one air-conditioning machine or apparatus P is included to provide air flow. The main duct Z₁ comprises a control member S₁ to control the total air flow rate of the main duct. The control member S₁ is located at a position before the junctions between the main duct and the branch ducts. The branch ducts C_{1.1}, C_{1.2}, C_{1.3} are each further provided with control members S_{1.1}, S_{1.2}, S_{1.3}, respectively for controlling the air flow rate through the branch duct, in particular the volumetric air flow rate. The control members of the main duct and the branch ducts each comprise a controller unit E₁, E_{1.1}, E_{1.2}, E_{1.3}. The controller unit E₁ of the main duct is placed at a higher level in the controlling hierarchy than the controller units E_{1.1}, E_{1.2}, E_{1.3}, of the branch ducts. This means that the controller unit E₁ of the main duct can govern and control the control members S_{1.1}, S_{1.2}, S_{1.3} of the branch ducts through the air control units E_{1.1}, E_{1.2}, E_{1.3}. In this manner, a data transfer connection exists between the controller unit of the control member of the main duct and the controller units of the control members of the branch ducts; a wireless data transfer connection or a connection through cables T or other equivalent data transfer buses may be used. The setting values are transmitted from the controller unit E₁ of the control member of the main duct to the controller units E_{1.1}, E_{1.2}, E_{1.3} of the control members of the branch ducts. The setting values are given simultaneously from the controller unit of the control member of the main duct to the controller units of the control members of the branch ducts. The setting values are transmitted to the controller units of all control members; furthermore, a setting value defined by the setting value combination is transmitted to the control member of the main duct irrespective of whether it is the same as or different from the previous setting.

The volumetric air flow rates required at any given time are defined on the basis of the air temperature and/or air quality and/or air noise level and/or air pressure conditions, or other similar factors. The flow rates may be defined in a given predetermined period of time. A combination of setting values for all the control members and air-conditioning machines is determined simultaneously based upon the required air flow rates. Thus, the control members and air-conditioning machines are set simultaneously to settings consistent with the setting value combination. With the setting values, the required volumetric air flow rates determined by calculation are realised, to achieve the air conditioning targets and from the targets of the system. The setting value combination comprises the setting values determined by calculation for all control members and air-conditioning machines of the system.

The setting data for actuating members of the control members which control the volumetric air flow rate may be used either directly or indirectly as setting values.

An air resistance coefficient may be given as a setting value. The air resistance coefficient in question may relate to the respective control member or a larger entity associated with the control member. A setting value for machines producing air flow may also be given in the form of e.g. rpm data or equivalent control data for the apparatus changing the air flow rate. A setting value combination is determined in the control system by employing an air-conditioning balancing calculation method which is in itself known in the art. The data required in controlling the control members and the air-conditioning machines are advantageously stored in a separate memory of the control unit of each control member or air-conditioning machine. The memory of each controller unit may contain, for instance, an air resistance coefficient and governing data required for controlling the control member associated therewith. This data sets the actuating means controlling the air flow of the control member to a setting defined by the air resistance coefficient. Other recorded data required in setting the control member, e.g. flow technology values for the control member, may also be stored in the memory of each control member.

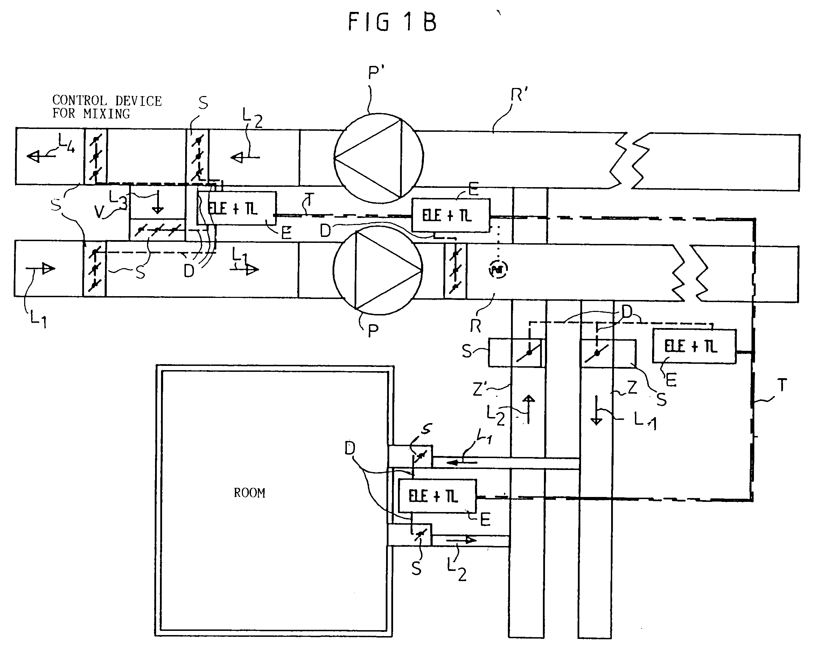

Figure 1b shows the operation diagram of the system according to the invention. As shown in the figure, the system comprises a trunk or main duct R. A branch or zone duct Z branches from the trunk duct R. An incoming air duct C leading to a space to be air-conditioned, for instance a room, branches from the zone duct Z. Similarly, an outlet air duct C' leads out of the space to be air-conditioned to a zone duct Z' of the outlet system, which is further connected to the trunk duct R' of the outlet system.

The trunk duct R comprises an air-conditioning machine P, preferably a blower, and a control member S, preferably a control damper, placed after the air-conditioning machine P.

A control member S is located at the beginning of the zone duct Z branching from the trunk duct R. A further controller member S is located in the incoming air duct C leading to the space to be air-conditioned. These control members may be for example control dampers.

Similarly, a control member S, preferably a control damper, is also located in the zone duct Z' of the outlet system. An air-conditioning machine P' is located in the trunk duct R' of the outlet system, for withdrawing air from the space to be air-conditioned. The air-conditioning machine P' is advantageously an outlet blower. A mixing unit is provided between the inlet side of the incoming air blower P and the outlet side of the outlet blower P'.

As shown by arrow L₁, air enters the system been drawn by air-conditioning machine P (e.g. a blower) into the trunk duct R, and travels through the control member S (e.g. a damper) into the zone duct Z, whence it branches into the incoming air duct C and into the space to be air-conditioned. Air to be removed from the space to be air-conditioned is shown by arrows L₂. The air leaves through the outlet air duct C' of the outlet system, passes through the zone duct Z' to the trunk duct R' of the outlet system. The air is drawn through trunk duct R' by the aid of suction provided by the outlet blower P' into the mixing unit, in which a part L₃ of the air flow is diverted through a by-pass duct V of the mixing unit back into the incoming air current L₁, a part L₄ of the air flow passing through the control damper S out of the mixing unit. Each control member S is controlled by a controller unit E. The controller units E are interconnected through data transfer buses T for data transfer. The controller units E are in data transfer connection with the setting apparatus of the control members S, through a governing member D.

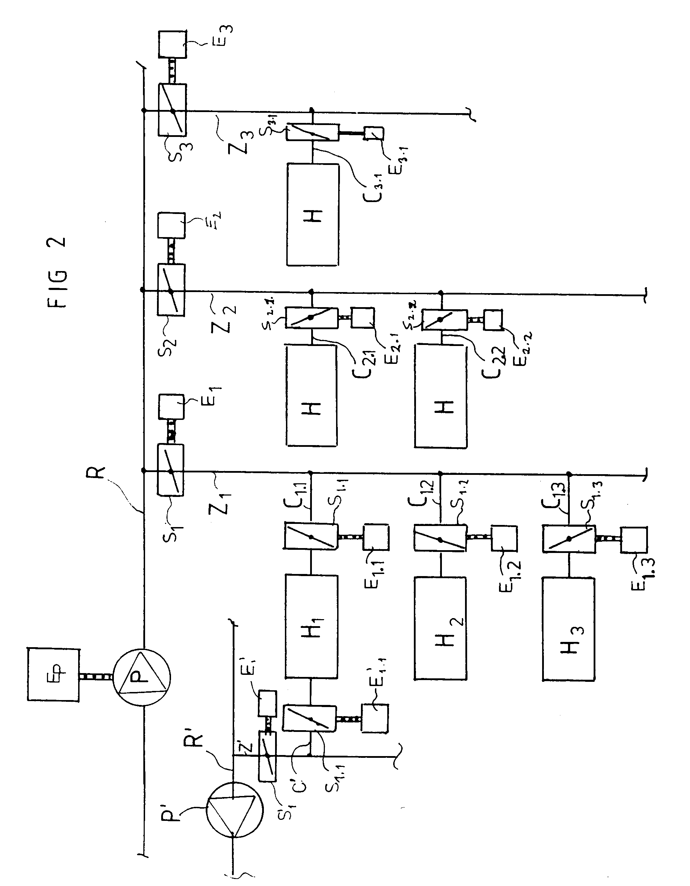

Figure 2 shows an air-conditioning system of the invention in more detail. Air conditioning machine P is located in the trunk duct R. Zone ducts Z₁, Z₂... Zₙ branch from the trunk duct R. Each zone duct Z₁, Z₂... Zₙ comprises a control member S at the beginning of the zone duct. The zone duct Z₁ comprises a control member S₁, the zone duct Z₂ comprises control member S₂ and the zone duct Zₙ comprises control member Sₙ. The control members may be for example control dampers or other flow controlling actuating apparatus. The control member S₁ of the zone duct Z₁ is controlled by a controller unit E₁. The control members S₂ and Sₙ of the zone ducts Z₂ and Zₙ are controlled by controller units E₂ and Eₙ respectively.

One or several incoming air ducts C leading to spaces to be air-conditioned branch from each zone duct Z₁. A control member S, for instance a control damper, for controlling the air flow is located in each incoming air duct C.

There is a control member S_{1.1} in duct C_{1.1} leading to space to be air-conditioned H₁, the opening setting value of which is controlled by controller unit E_{1.1}. Similarly, incoming air duct C_{1.2} leading to space H₂ comprises a control member S_{1.2}, which is located in the duct and which is controlled by a controller unit E_{1.2}.

A plurality of branch ducts C_{1.1}, C_{1.2}... C_{2.1} C_{2.2} may lead from each zone duct Z₁, Z₂... into spaces H to be air-conditioned, consistent with the number of spaces on the zone duct which are to be air-conditioned.

The Figure also shows an outlet duct C' leading from one of the spaces. The outlet duct is connected to a zone duct Z' of the outlet system which is further connected to the trunk duct R' of the outlet system. The trunk duct R' of the outlet system comprises an air-conditioning machine P', advantageously an outlet blower. The zone duct Z' comprises a control member S₁' for closing and opening the zone duct at the junction of the zone duct and the trunk duct R' of the outlet system, said member being controlled by a controller unit E₁'. The outlet duct between the space to be air-conditioned and the zone duct Z₁' comprises a control member S_{1.1} controlled by controller unit E_{1.1}'. Each space to be air-conditioned may comprise similar outlet system apparatus. It is also possible to have a system according to the invention in which there are no outlet ducts, the air being removed from the space to be air-conditioned under the effect of an overpressure produced by the air-conditioning machine P of the incoming air system, e.g. a blower. The space to be air-conditioned may thus be provided with an outlet duct leading directly out-of-doors. The controller units of all control members S and machines P are interconnected by a data bus T, so that they are in data transfer connection with each other. Similarly, governing has been arranged between the setting means of each control member and its controller unit. This governing is indicated in Figure 1B by the letter D.

Referring to the example shown in Figure 2, the operation of the apparatus in changing situations is as follows. Let us assume that the air-conditioning installation is in a stable state and that air is being brought to all spaces and areas of the installation in order to provide air in quantities consistent with the situation and loading of the plan. As the loading of a space H1 increases, for instance because of an increased number of people, so that the air quantity required increases by 25%, the controller unit E_{1.1} of the control member S_{1.1} of the incoming air duct C_{1.1} of the space H1 transmits information about the increased air need to the controller unit E₁ of the control member S₁ of the zone Z₁. The controller unit E₁ of the control member S₁ of the zone Z₁ calculates new setting data for all control members of the zone in the changed situation, on the basis of the specific graphs of the components and the design parameters of the system, so that the air quantity of the space H1 will be increased by 25% and the situation in other spaces of the zone remains the same.

The information about the increased air need is passed from zone controller unit E₁ to the controller unit Eₚ of the air-conditioning machine P, which calculates the condition of the entire installation and determines a new setting value for the apparatus P corresponding to the increased air quantity, for instance a new volumetric air flow rate delivered by a test unit, for example a blower. When the new setting value of the machine P has been obtained from a computer pattern contained in the controller unit E, the setting values of all other control members are known at the same time and available for the controller units of control members controlling the air flow. A change command is transmitted by the machine P via its controller unit Eₚ then the zone controller units of the control members of the zone ducts, to the controller units of control members disposed in the ducts leading to the spaces to be air-conditioned. A simultaneous change is thus implemented in the entire system, the only notable change being the increase of the air quantity of space H1 by the desired 25%.

In a situation in which the installation is used to full capacity, no air-conditioned space or area is allowed to have more or less air than that calculated for it in the situation in question, unless non-programmed factors put the space at a higher priority than others. However, in the situation in which the installation is not used to full capacity, due to a lower loading being required in some spaces, the free capacity may be directed and distributed to spaces which ask for it in the ratio of their needs and priority status.

The air-conditioning system and procedure allow the provision of planned quantities of air for all situations at the minimum pressure and minimum energy to be guaranteed for each situation. The system also permits a space-specific control and permits an efficient and speedy isolation of a fire by altering the pressure conditions of the spaces to be air-conditioned.

In the apparatus shown in Figure 2, all controller units of the installation are connected to the same data transfer bus T. The position of these controller units E in the hierarchy of the installation is solely determined by programmes, so that all units are able to receive and transmit data.

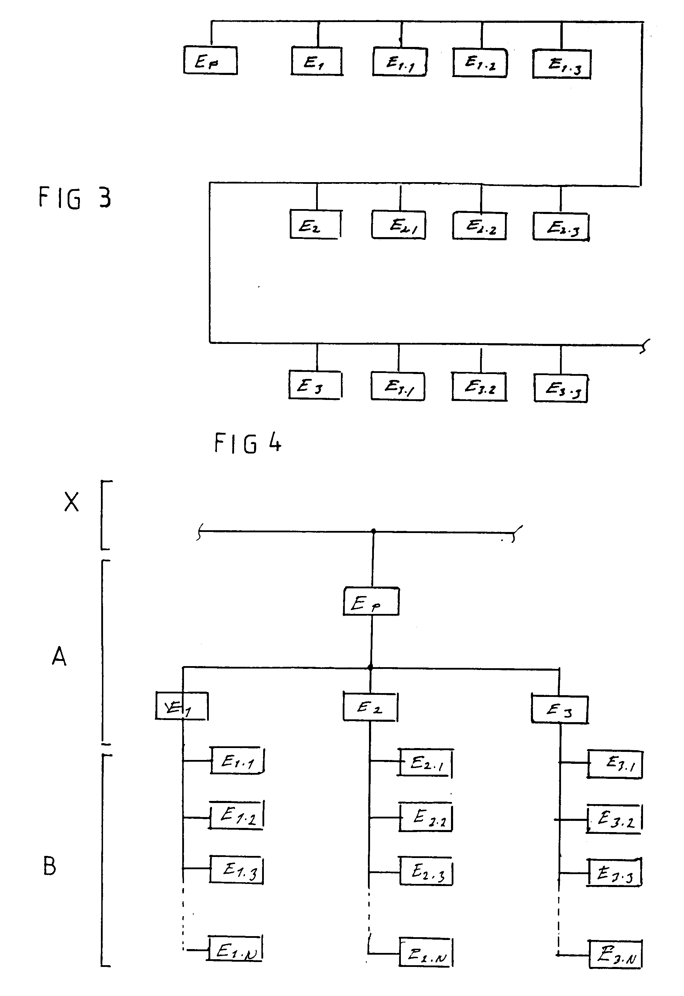

In the system shown in Figure 3, the communication between controller units E is divided physically into two separated planes A and B. On plane A, communication takes place between the zone controller units E₁, E₂, E₃ and the controller unit Eₚ of the machine P. On plane B, data transfer communication exists between each zone unit E₁, E₂, E₃... Eₙ and, subjected thereto, the controller units E_{1.1}, E_{1.2}... E_{2.1}, E_{2.2}... of the control members leading to the spaces to be air-conditioned. An advantage of the system of Figure 3 is a low bus loading.

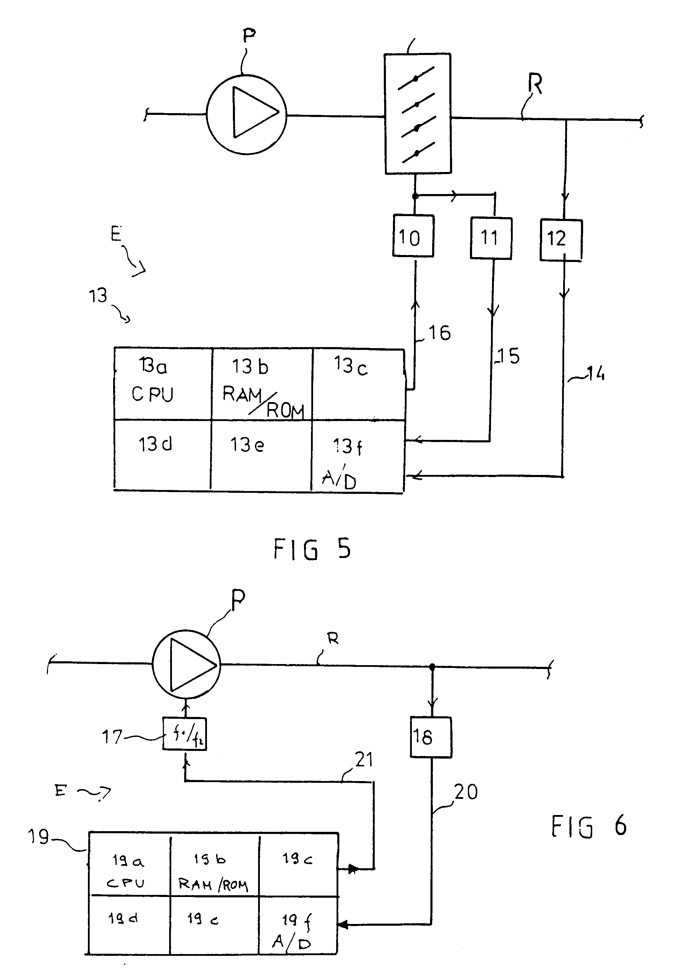

In the apparatus shown in Figure 4, the controller unit Eₚ of the air-conditioning machine of the trunk duct is further connected between the process plane to the rest of the data system X of the building.

Figure 5 is a more detailed block diagram of the opening station of a control damper located advantageously in the trunk duct after a blower and shows how the air-conditioning machine P is controlled. In this design, the controller unit E comprises an actuating means 10 for a control damper, and a pressure transmitter 12 in the trunk duct after the control damper, the transmitter 12 measuring air pressure in that part of the trunk duct R. The controller E further comprises a CPU 13 having a CPU section for calculations, a RAM/ROM memory section 13b for storing data related to the programs in the process, output controls 13c, input signal connections 13d from the setting transmitter of the control damper and possibly for receiving data from other transmitters, a serial connection bus 13e, and an A/D converter 13f. The data from the pressure transmitter 12 is directed along data bus 14 to CPU 13. The setting data for the control damper is transmitted from the setting transmitter 11 to block 13f along a data transfer bus 15 to the CPU 13 of the controller unit. A governing step is output from the output control at 13c, for defining the setting of the control damper through actuating means 10.

Figure 6 shows the control of the air-conditioning machine P, advantageously a blower. The controller unit E of the blower P comprises a frequency converter 17 for converting the rpm of the blower P. A pressure pick-up 18 is located on the outlet side of blower P in the trunk duct R. The central governing part 19 of the controller E comprises the central functional components of the embodiment of the figure, corresponding to those in the design of Figure 6. The CPU 19 comprises computer programs 19a, an output 19c from memory block 19b, input connections 19d, a serial connection bus 19e and an A/D converter 19f. An input signal is conducted along data transfer bus 20 from the pressure pick-up 18 to the A/D converter 19f of CPU 19. A governing value 21 is provided from output 19c of CPU 19 for the frequency converter 17, for producing a rpm setting value signal for the blower P.

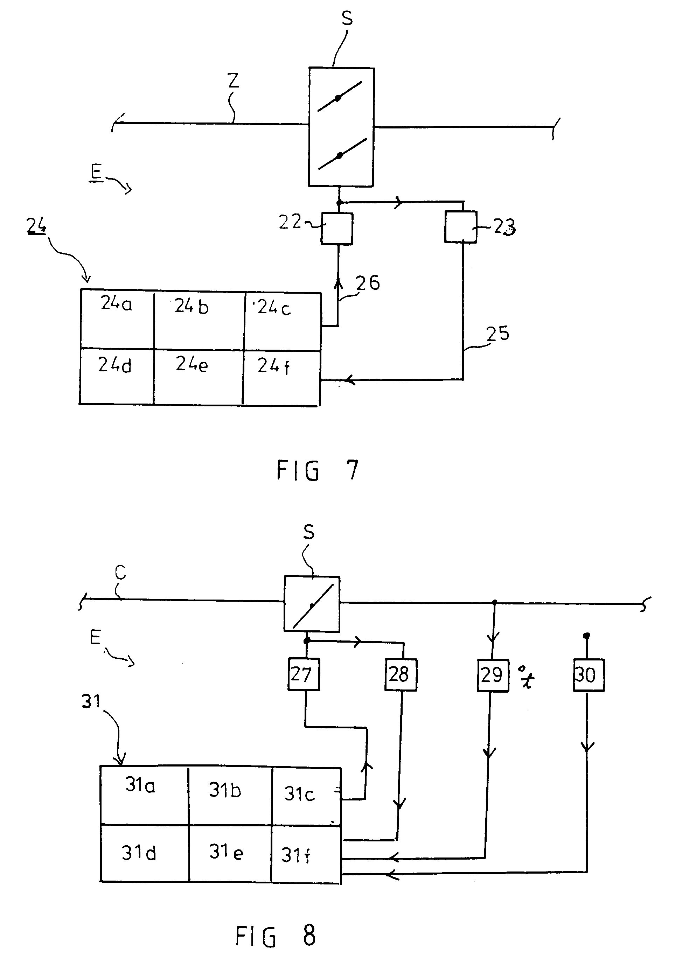

Figure 7 shows the controller unit E of a control damper S disposed in a zone duct Z. The unit E consists of actuating means 22 for the control damper whereby the computer controls the position of the damper. Pick-up 23 sends information on the position of the control damper to CPU 24, which comprises programs 24a, a memory 24b, an output connection 24c, input connections 24d, a serial connection 24e and an A/D converter unit 24f, to which the pick-up information from pick-up 23 is carried along bus 25. Control data is transmitted to the setting means 22 via controls 26 from the output 24c of CPU 24.

Figure 8 shows a control damper S used in the procedure of the invention located in a duct C leading to a space to be air-conditioned. The controller unit E of the control damper comprises means 27 for governing the setting of the control damper, a pick-up 28 indicating the position of the control damper, a temperature pick-up 29 in the air-conditioning duct, and a temperature pick-up 30 located in the room space. A data bus 31 leads from pick-up 30 to CPU of the controller E. Temperature pick-up 29 in air duct C is connected to CPU by data bus. Position pick-up 28 is connected to CPU through data bus 34. An output data bus connects CPU 32 and the setting means 27, whereby a signal determining the position of the control damper may be transmitted to the setting means. The apparatus further comprises a computer section, a CPU section, a memory section and a governing signal section. The apparatus further comprises remote control means by the aid of which unit can be in wireless communication with a remote control centre, to alter the setting values of unit or for reading the temperature and/or setting values transmitted thereto.

## Claims

1. A procedure for controlling and maintaining air flows or equivalent in an air-conditioning installation or equivalent, said air-conditioning installation comprising one or several air-conditioning machines (P) for producing the desired flows, and one or several duct systems for conducting the flows into desired room spaces (H₁, H₂...) or equivalent, and/or from room spaces (H₁, H₂...) or equivalent, said duct systems being composed of requisite trunk, zone and room duct systems (R,Z,C), and said duct systems being provided with three or more control members (S₁, S_{1.1}, S_{1.2},...;S₂, S_{2.1}, S_{2.2}...) on different levels of hierarchy, for controlling the air flows or equivalent, and with one or several control systems for defining, controlling and maintaining the requisite air flows or equivalent, wherein the control systems have controller units (E_{P}, E₁, E_{1.1}, E_{1.2}...;E₂, E_{2.1}...) for controlling the air-conditioning machines (P) or control members (S₁, S_{1.1}, S_{1.2},...;S₂, S_{1.1}, S_{2.2}...), between which controller units there exists a data transfer connection through data transfer buses (T₁) or equivalent, said controller units (E_{P}, (E₁, E_{1.1}, E_{1.2},...;E₂, E_{2.1}...) each having a memory for storing data and programmable capacity for processing the data, the volumetric flow rates of air required at different points of the air-conditioning system at different times being defined at the same time on the basis of the air temperature and/or air quality and/or air noise levels and/or air pressure conditions, and/or other equivalent factors, characterised in that the combination of the setting values of the control members (S₁, S_{1.1}, S_{1.2},...;S₂, S_{2.1}, S_{2.2}...) and of the air conditioning machines (P), with which the defined volumetric air flow quantities are realised is defined at the same time on the basis of the defined volumetric air flow rates, and the required control members (S₁, S_{1.1}, S_{1.2}...;S₂, S_{2.1}, S_{2.2}...) and air-conditioning machines (P) are set at the same time to setting values consistent with said setting value combination, and that when the volumetric flow rate of any air flow in the system is changed, a new setting value combination is determined for the control members (S₁, S_{1.1}, S_{1.2}...;S₂, S_{2.1}, S_{2.2}...) and for the air-conditioning machines (P), and the control members (S₁, S_{1.1}, S_{1.2}...;S₂, S_{2.1}, S_{2.2}...) and the air-conditioning machines (P) are set to the settings implied by the new combination.

2. Procedure according to claim 1, characterised in that the setting values of the control members (S₁, S_{1.1}, S_{1.2}...;S₂, S_{2.1}, S_{2.2}...) comprise setting values which, either directly or indirectly, are setting data of actuating members of the control members (S₁, S_{1.1}, S_{1.2}...;S₂, S_{2.1}, S_{2.2}...) controlling the volumetric air flow rate.

3. Procedure according to claim 1 or 2, characterised in that each setting value is given in the form of an air resistance coefficient or equivalent relating to the respective control member or to a larger entity associated with the control member.

4. Procedure according to claim 3, characterised in that a memory is provided for each control member (S₁, S_{1.1}, S_{1.2}...;S₂, S_{2.2}...) in which the air resistance coefficient and the corresponding setting of the control member (S₁, S_{1.1}, S_{1.2}...;S₂, S_{2.1}, S_{2.2}...) are stored, each control member (S₁, S_{1.1}, S_{1.2}...;S₂, S_{2.1}, S_{2.2}...) being set in the procedure to a setting which is determined by the controller unit (E₁, E₂...) of the control member (S₁, S_{1.1}, S_{1.2}...;S₂, S_{2.1}, S_{2.2}...), which is on a higher hierarchical level in the control system.

5. Procedure according to any one of the preceding claims, characterised in that values related to air-conditioning technology of parts of the air-conditioning system, which are stored in the memory of the control systems, in particular their flow technology values, are used for determining the setting value combination.

6. Procedure according to any one of the preceding claims, characterised in that the data required in setting the control members and/or the air-conditioning machines are stored in the memory of each control member (S₁, S_{1.1}, S_{1.2}...;S₂, S_{2.1}, S_{2.2}...) and/or of a separate controller unit (E_{P}) of the air-conditioning machines (P₁, P₂...).

7. Procedure according to any one of the preceding claims, characterised in that the setting value combination is determined in the control system, employing an air-conditioning balancing calculation method.

8. An air-conditioning system comprising at least one trunk duct (R) and zone ducts Z₁, Z₂, Z₃...) branching off therefrom, and room ducts (C_{1.1}, C_{1.2}...;C_{2.1}, C_{2.2}...;C_{3.1}, C_{3.2}, C_{3.3}...) branching further from the zone ducts (Z₁, Z₂, Z₃...) to spaces to be air-conditioned, the system comprising at least one air-conditioning machine (P) in the trunk duct (R), for producing air flow and at least one control member (S₁ and/or S₂ and/or S₃...) for controlling the volumetric air flow rate entering or leaving a zone duct, and control members (S_{1.1}, S_{1.2}...;S_{2.1}, S_{2.2}...;S_{3.1}...) controlling the volumetric air flow rate conducted to spaces, or an air flow derived therefrom, in which system, the control members (S₁, S_{1.1}, S_{1.2},... S₂, S_{2.1}, S_{2.2}...) are at different hierarchical levels for data transfer, the system comprising controller units (E_{P}, E₁, E_{1.1}, E_{1.2}, E_{1.3}, ...) for controlling the air-conditioning machine or control members (S₁, S_{1.1}, S_{1.2},...;S₂, S_{2.1}, S_{2.2}...) and data transfer buses (T₁) whereby a data-transfer connection exists between the controller units, the controller units (E_{P}, E₁, E_{1.1}. E_{1.2}, E_{1.3}, ...) having memories for storing data and programs for processing the data, the system comprising programs by which the volumetric air flow rates required at different points of the air conditioning system at different times are determined on the basis of the air temperature and/or air quality and/or air noise level and/or air pressure conditions and/or other equivalent factors, characterised in that the combination of the setting values of the control members (S₁, S_{1.1}, S_{1.2}, S₂, S_{2.1}, S_{2.2} ...) and the air conditioning machines (P) by which the defined volumetric air flow rates are realised is determined centrally and at the same time on the basis of the defined volumetric air flow rates, the setting of the control members (S₁, S_{1.2} ...) and air-conditioning machines (P) controlling the volumetric air flow quantities being determined centrally and simultaneously by the data derived from the controller unit of the control member which is on the highest hierarchical level, and the control members (S₁, S_{1.2}, ... S₂, S_{2.1} ...) and air conditioning machines (P) being set at the same time to settings consistent with the setting value combination.

9. The air-conditioning system of claim 8, wherein the spaces to be air-conditioned comprise room spaces (H₁; H₂... ), halls, cupboards or focussed ventilation apparatus, or equivalent.

10. An air-conditioning system according to claims 8 or 9, characterised in that the system comprises a controller unit associated with each control member, the controller unit having a memory in which are stored the air resistance coefficients of the respective control member and data relating to the position of actuating means controlling the air flow of the control member, associated with each air resistance coefficient.

## Patentansprüche

1. Verfahren zum Steuern und Aufrechterhalten von Luftflüssen oder dergleichen in einer Klimaanlage oder dergleichen, die umfaßt:
eine oder mehrere Klimatisierungseinrichtungen (P) zum Erzeugen der gewünschten Luftflüsse, und eine oder mehrere Rohrleitungsanlagen zum Leiten der Flüsse in die gewünschten Räume (H₁, H₂...) oder dergleichen, und/oder von Räumen (H₁, H₂...) oder dergleichen weg, wobei sich die Rohrleitungsanlagen aus den nötigen Stamm-, Zonen- und Raumrohrleitungsanlagen (R, Z, C) zusammensetzen, und die Rohrleitungsanlagen mit drei oder mehr Steuergliedern (S₁, S_{1.1}, S_{1.2},...; S₂, S_{2.1}, S_{2.2}...) auf verschiedenen Hierarchieebenen ausgestattet sind zum Steuern der Luftflüsse oder dergleichen, und mit einem oder mehreren Steuerwerken zum Definieren, Steuern und Aufrechterhalten der nötigen Luftflüsse oder dergleichen, wobei die Steuerwerke Steuereinheiten (Eₚ, E₁, E_{1.1}, E_{1.2}...; E₂, E_{2.1}...) besitzen zum Steuern der Klimatisierungseinrichtungen (P) oder der Steuerglieder (S₁, S_{1.1}, S_{1.2},...; S₂, S_{1.1}, S_{2.2}...) und zwischen den Steuereinheiten eine Datenübertragungsverbindung durch Datenübertragungs-Vielfachleitungen (T₁) vorgesehen ist, und wobei die Steuereinheiten (Eₚ, E₁, E_{1.1}, E_{1.2},...; E₂, E_{2.1}...) jeweils einen Speicher zum Speichern von Daten und einen programmierbaren Bereich zum Verarbeiten der Daten besitzen, und die an verschiedenen Punkten der Klimaanlage zu verschiedenen Zeiten erforderlichen volumetrischen Flußraten der Luft definiert sind auf der Basis der Lufttemperatur und/oder der Luftqualität und/oder der Luftgeräuschpegel und/oder der Luftdruckverhältnisse, und/oder anderen gleichwertigen Faktoren, **dadurch gekennzeichnet, daß**
die Kombination der Einstellwerte der Steuerglieder (S₁, S_{1.1}, S_{1.2},...; S₂, S_{2.1}, S_{2.2}...) und der Klimatisierungseinrichtungen (P), mit denen die definierten volumetrischen Luftflußmengen realisiert werden, auf der Basis der definierten volumetrischen Luftflußraten definiert wird, und die erforderlichen Steuerglieder (S₁, S_{1.1}, S_{1.2}...; S₂, S_{2.1}, S_{2.2}...) und Klimatisierungseinrichtungen (P) auf Einstellwerte gesetzt werden, die mit der Einstellwertkombination übereinstimmen, und daß bei einer Änderung der volumetrischen Flußrate irgendeines Luftflusses in der Anlage eine neue Einstellwertkombination für die Steuerglieder (S₁, S_{1.1}, S_{1.2}...; S₂, S_{2.1}, S_{2.2}...) und für die Klimatisierungseinrichtungen (P) bestimmt wird, und die Steuerglieder (S₁, S_{1.1}, S_{1.2}...; S₂, S_{2.1}, S_{2.2}...) und die Klimatisierungseinrichtungen (P) auf die Einstellungen gesetzt werden, die aus der neuen Kombination hervorgehen.

2. Verfahren gemäß Anspruch 1,
**dadurch gekennzeichnet, daß**
die Einstellwerte der Steuerglieder (S₁, S_{1.1}, S_{1.2}...; S₂, S_{2.1}, S_{2.2}...) Einstellwerte umfassen, die, entweder direkt oder indirekt, Einstelldaten von Betätigungsgliedern der Steuerglieder (S₁, S_{1.1}, S_{1.2}...; S₂, S_{2.1}, S_{2.2}...) sind, die die volumetrische Luftflußrate steuern.

3. Verfahren gemäß Anspruch 1 oder 2,
**dadurch gekennzeichnet, daß**
jeder Einstellwert in der Form eines Luftwiderstandskoeffizienten oder dergleichen gegeben ist, der sich auf das entsprechende Steuerglied oder auf ein größeres Gebilde, das mit dem Steuerglied verbunden ist, bezieht.

4. Verfahren gemäß Anspruch 3,
**dadurch gekennzeichnet, daß**
ein Speicher für jedes Steuerglied (S₁, S_{1.1}, S_{1.2}...; S₂, S_{2.2}...) zur Verfügung steht, in dem der Luftwiderstandskoeffizient und die entsprechende Einstellung des Steuerglieds (S₁, S_{1.1}, S_{1.2}...; S₂, S_{2.1}, S_{2.2}...) gespeichert sind, wobei jedes Steuerglied (S₁, S_{1.1}, S_{1.2}...; S₂, S_{2.1}, S_{2.2}...) in dem Verfahren auf eine Einstellung gesetzt wird, die durch die Steuereinheit (E₁, E₂...) des Steuerglieds (S₁, S_{1.1}, S_{1.2},...; S₂, S_{2.1}, S_{2.2}...), das sich auf einer höheren hierarchischen Ebene der Anlage befindet, bestimmt wird.

5. Verfahren nach einem der vorstehenden Ansprüche,
**dadurch gekennzeichnet, daß**
Werte, die sich auf die Klimatisierungstechnologie von Teilen der Klimaanlage beziehen, die in dem Speicher des Steuerwerks gespeichert sind, insbesondere ihre flußtechnologischen Werte, zur Bestimmung der Einstellwertkombination verwendet werden.

6. Verfahren nach einem der vorstehenden Ansprüche,
**dadurch gekennzeichnet, daß**
die Daten, die bei der Einstellung der Steuerglieder und/oder der Klimatisierungseinrichtungen erforderlich sind, im Speicher jedes Steuerglieds (S₁, S_{1.1}, S_{1.2}...; S₂, S_{2.1}, S_{2.2}...) und/oder einer separaten Steuereinheit (Eₚ) der Klimatisierungseinrichtungen (P₁, P₂...) gespeichert werden.

7. Verfahren nach einem der vorstehenden Ansprüche,
**dadurch gekennzeichnet, daß**
die Einstellwertkombination im Steuerwerk bestimmt wird, wobei ein Verfahren der Klimatisierungsgleichgewichtsberechnung angewendet wird.

8. Klimaanlage mit zumindest einer Stammrohrleitung (R), davon abzweigenden Zonenrohrleitungen (Z₁, Z₂, Z₃...) und Raumrohrleitungen (C_{1.1}, C_{1.2}...; C_{2.1}, C_{2.2}...; C_{3.1}, C_{3.2}, C_{3.3}...) die weiter von den Zonenrohrleitungen (Z₁, Z₂, Z₃...) zu Räumen abzweigen, die zu klimatisieren sind, mit zumindest einer Klimatisierungseinrichtung (P) in der Stammrohrleitung (R) zur Erzeugung eines Luftflusses, zumindest einem Steuerglied (S₁ und/oder S₂ und/oder S₃...) zur Steuerung der volumetrischen Luftflußrate, die in eine Zonenrohrleitung ein- oder austritt, und Steuerglieder (S_{1.1}, S_{1.2}...; S_{2.1}, S_{2.2}...; S_{3.1}...), die die volumetrische Luftflußrate steuern, die zu Räumen geleitet wird, oder einen Luftfluß, der davon abgeleitet wird, wobei sich die Steuerglieder (S₁, S_{1.1}, S_{1.2},...S₂, S_{2.1}, S_{2.2}...) der Anlage auf verschiedenen hierarchischen Ebenen bezüglich der Datenübertragung befinden, und mit Steuereinheiten (Eₚ, E₁, E_{1.1}, E_{1.2}, E_{1.3},...) zum Steuern der Klimatisierungseinrichtung oder der Steuerglieder (S₁, S_{1.1}, S_{1.2},...S₂, S_{2.1}, S_{2.2}...) und Datenübertragungs-Vielfachleitungen (T₁), wobei eine Datenübertragungsverbindung zwischen den Steuereinheiten besteht, die Steuereinheiten (Eₚ, E₁, E_{1.1}, E_{1.2}, E_{1.3},...) Speicher zum Speichern von Daten und Programme zum Verarbeiten der Daten besitzen, und die Anlage Programme umfaßt, mit denen die volumetrischen Luftflußraten, die an verschiedenen Punkten der Klimaanlage zu verschiedenen Zeiten erforderlich sind, auf der Basis der Lufttemperatur und/oder der Luftqualität und/oder der Luftgeräuschpegel und/oder der Luftdruckverhältnisse und/oder anderen gleichwertigen Faktoren bestimmt werden,
**dadurch gekennzeichnet, daß**
die Kombination der Einstellwerte der Steuerglieder (S₁, S_{1.1}, S_{1.2}, S₂, S_{2.1}, S_{2.2}...) und der Klimatisierungseinrichtungen (P), durch die die definierten volumetrischen Luftflußraten realisiert werden, zentral bestimmt wird, und hierbei auf der Basis der definierten volumetrischen Luftflußraten die Einstellung der Steuerglieder (S₁, S_{1.2}...) und Klimatisierungseinrichtungen (P), die die volumetrischen Luftflußmengen steuern, zentral und gleichzeitig bestimmt wird durch die Daten, die von der Steuereinheit des Steuerglieds, das sich auf der höchsten hierarchischen Ebene befindet, abgeleitet werden, und daß die Steuerglieder (S₁, S_{1.2},...S₂, S_{2.1}...) und Klimatisierungseinrichtungen (P) hierbei auf Einstellungen gesetzt werden, die mit der Einstellwertkombination übereinstimmen.

9. Klimaanlage gemäß Anspruch 8,
**dadurch gekennzeichnet, daß**
die zu klimatisierenden Räume Zimmer (H₁; H₂...), Hallen, Schränke, genau eingestellte Ventilationsvorrichtungen oder dergleichen umfassen.

10. Klimaanlage gemäß Anspruch 8 oder 9,
**dadurch gekennzeichnet, daß**
die Anlage eine Steuereinheit umfaßt, die mit jedem Steuerglied verbunden ist, wobei die Steuereinheit einen Speicher besitzt, in dem die Luftwiderstandskoeffizienten der entsprechenden Steuerglieder und Daten, die mit jedem Luftwiderstandskoeffizienten verbunden sind und sich auf die Lage der Betätigungseinrichtung, die den Luftfluß des Steuerglieds steuert, beziehen, gespeichert sind.

## Revendications

1. Procédé de régulation et de maintien de courants d'air ou analogues dans une installation de conditionnement d'air ou analogue, cette installation de conditionnement d'air comprenant une ou plusieurs machines de conditionnement d'air (P) pour produire les courants souhaités, et un ou plusieurs systèmes de gaines ou conduites pour amener les courants dans les espaces de locaux souhaités, (H₁, H₂...) ou analogues, et/ou à partir d'espaces de locaux H₁, H₂...) ou analogues, ces systèmes de gaines étant constitués par les systèmes requis de gaine de tronc commun, de zones et de locaux (R,Z,C), et ces systèmes de gaines étant équipés de trois éléments de commande ou davantage (S₁, S_{1.1}, S_{1.2},...;S₂, S_{2.1}, S_{2.2}...) à différents niveaux hiérarchiques, pour commander les courants d'air ou analogues, et avec un ou plusieurs systèmes de commande pour définir, réguler et maintenir les courants d'air nécessaires ou analogues, les systèmes de commande comportant des unités programmables (Eₚ, E₁, E_{1.1}, E_{1.2}...;E₂, E_{2.1}...) pour réguler des machines de conditionnement d'air (P) ou les systèmes de commande (S₁, S_{1.1}, S_{1.2},...; S₂, S_{2.1}, S_{2.2}...) unités programmables entre lesquelles existe une liaison de transfert de données par des bus de transfert de données (T₁) ou analogues, ces unités programmables (Eₚ, E₁, E_{1.1}, E_{1.2}...; E₂, E_{2.1}...) possédant chacune une mémoire pour stocker des données, une capacité programmable pour traiter les données, les débits volumétriques d'air nécessaires en différents points du système de conditionnement d'air à différents moments étant définis en même temps en fonction de la température de l'air et/ou de la qualité de l'air et/ou des niveaux sonores de l'air et/ou des conditions de pression d'air, et/ou d'autres facteurs analogues, procédé caractérisé en ce que la combinaison des valeurs prescrites des éléments de commande (S₁, S_{1.1}, S_{1.2},...;S₂, S_{2.1}, S_{2.2}...) et des machines de conditionnement d'air (P), permettant de réaliser les quantités de courants d'air volumétriques définies, est déterminée en même temps sur la base des débits d'air volumétriques, et les éléments de commandes nécessaires (S₁, S_{1.1}, S_{1.2},...;S₂, S_{2.1}, S_{2.2}...) et les machines de conditionnement d'air (P), sont ajustés en même temps aux valeurs prescrites compatibles avec la combinaison de valeurs prescrites et en ce que lorsque le débit volumétrique de tout courant d'air est modifié dans le système, une nouvelle combinaison de valeurs prescrites est déterminée pour les éléments de commande (S₁, S_{1.1}, S_{1.2},...; S₂, S_{2.1}, S_{2.2}...) et pour les machines de conditionnement d'air (P), et les éléments de commande (S₁, S_{1.1}, S_{1.2},...;S₂, S_{2.1}, S_{2.2}...) et les machines de conditionnement d'air (P) sont ajustés aux valeurs prescrites rendues implicites par la nouvelle combinaison.

2. Procédé selon la revendication 1, caractérisé en ce que les valeurs prescrites des éléments de commande (S₁, S_{1.1}, S_{1.2},...;S₂, S_{2.1}, S_{2.2}...), comprennent des valeurs prescrites qui, soit directement, soit indirectement, sont des données prescrites d'éléments d'actionnement des éléments de commande (S₁, S_{1.1}, S_{1.2},...; S₂, S_{2.1}, S_{2.2}...) régulant le débit d'air volumétrique.

3. Procédé selon la revendication 1 ou 2, caractérisé en ce que chaque valeur prescrite est donnée sous forme d'un coefficient de résistance de l'air ou analogue se rapportant à l'élément de commande respectif ou à une entité plus grande associée à l'élément de commande.

4. Procédé selon la revendication 3, caractérisé en ce qu'il est prévu une mémoire pour chaque élément de commande (S₁, S_{1.1}, S_{1.2},...;S₂, S_{2.1}, S_{2.2}...), dans laquelle sont stockés le coefficient de résistance de l'air et la valeur prescrite correspondant de l'élément de commande (S₁, S_{1.1}, S_{1.2},...; S₂, S_{2.1}, S_{2.2}...), chaque élément de commande (S₁, S_{1.1}, S_{1.2},...;S₂, S_{2.1}, S_{2.2}...) étant ajusté dans le procédé à une valeur prescrite qui est déterminée par l'unité programmable (E₁, E₂...) de l'élément de commande (S₁, S_{1.1}, S_{1.2},...;S₂, S_{2.1}, S_{2.2}...) qui se situe à un niveau hiérarchique supérieur dans le système de commande.

5. Procédé selon l'une quelconque des revendications précédentes, caractérisé en ce que des valeurs se rapportant à la technique du conditionnement d'air de parties du système de conditionnement d'air et qui sont stockées dans la mémoire des systèmes de commande, notamment leurs valeurs technologiques d'écoulement, sont utilisées pour déterminer la combinaison des valeurs prescrites.

6. Procédé selon l'une quelconque des revendications précédentes, caractérisé en ce les données nécessaires pour ajuster les éléments de commande et/ou les machines de conditionnement d'air sont stockées dans la mémoire de chaque élément de commande (S₁, S_{1.1}, S_{1.2},...;S₂, S_{2.1}, S_{2.2}...), et/ou d'une unité programmable séparée (Eₚ) des machines de conditionnement d'air (P₁, P₂...).

7. Procédé selon l'une quelconque des revendications précédentes, caractérisé en ce que la combinaison des valeurs prescrites est déterminée dans le système de commande, en faisant appel à un procédé de calcul d'équilibrage de conditionnement d'air.

8. Système de conditionnement d'air comprenant au moins une gaine de tronc commun (R) et des gaines de zones (Z₁, Z₂, Z₃...) dérivant de celle-ci, et des gaines de locaux (C_{1.1}, C_{1.2},...;C_{2.1}, C_{2.2}...; C_{3.1}, C_{3.2}, C_{3.3}...) dérivées de gaines de zones (Z₁, Z₂, Z₃...) vers les espaces à climatiser, le système comprenant au moins une machine de conditionnement d'air (P) dans la gaine de tronc commun (R), pour produire un écoulement d'air et au moins un élément de commande (S₁ et/ou S₂ et ou S₃...) pour réguler le débit d'air volumétrique entrant dans ou quittant une gaine de zones, et des éléments de commande (S_{1.1}, S_{1.2},...; S_{2.1}, S_{2.2}...; S_{3.1}...) commandant le débit d'air volumétrique amené dans des espaces, ou un courant d'air dérivé système dans lequel les éléments de commande (S₁, S_{1.1}, S_{1.2},...; S₂, S_{2.1}, S_{2.2}...) sont à des niveaux de hiérarchie différents pour le transfert des données, le système comprenant des unités programmables (Eₚ, E₁, E_{1.1}, E_{1.2}, E_{1.3}...) pour réguler la machine de conditionnement d'air ou les éléments de commande (S₁, S_{1.1}, S_{1.2},...;S₂, S_{2.1}, S_{2.2}...) et les bus de transfert de données (T₁), une connection de transfert de données existant entre les unités programmables, les unités programmables (Eₚ, E₁, E_{1.1}, E_{1.2}, E_{1.3}...) possédant des mémoires pour le stockage des données et des programmes pour traiter les données, le système comprenant des programmes grâce auxquels les débits d'air volumétriques nécessaires en différents points du système de conditionnement d'air à différents moments sont déterminés en fonction de la température de l'air et/ou de la qualité de l'air et/ou du niveau sonore de l'air et/ou des conditions de pression d'air et/ou d'autres facteurs analogues, système caractérisé en ce que la combinaison des valeurs prescrites des éléments de commande (S₁, S_{1.1}, S_{1.2},...;S₂, S_{2.1}, S_{2.2}...) et des machines de conditionnement d'air (P), permettant de réaliser les débits d'air volumétriques définis, est déterminée d'une manière centrale et simultanée en fonction des débits d'air volumétriques définis, l'ajustement ou réglage des éléments de commande (S₁, S_{1.1}, S_{1.2},...;S₂, S_{2.1}, S_{2.2}...) et des machines de conditionnement d'air (P) commandant les quantités des débits d'air volumétriques étant déterminé d'une manière centrale et simultanée par les données dérivées de l'unité programmable de l'élément de commande qui se situe au plus haut niveau hiérarchique, et les éléments de commande (S₁, S_{1.2}...) et les machines de conditionnement d'air (P) étant ajustés en même temps aux valeurs prescrites compatibles avec la combinaison des valeurs prescrites.

9. Système de conditionement d'air selon la revendication 8, dans lequel les espaces à climatiser comprennent des espaces de locaux (H₁; H₂...), des grandes salles, des armoires ou des appareils de ventilation localisés ou analogues.

10. Système de conditionement d'air selon les revendications 8 ou 9, caractérisé en ce que le système comprend une unité programmable affectée à chaque élément de commande, l'unité programmable possédant une mémoire dans laquelle sont stockés les coefficients de résistance de l'air de l'élément de commande respectif et les données concernant la position des moyens d'actionnement commandant l'écoulement d'air de l'élément de commande, en liaison avec chaque coefficient de résistance d'air.
